# EUROPEAN PATENT APPLICATION

(11) **EP 3 032 487 A1**
(43) Date of publication of application: **15.06.2016**
(21) Application number: 15190648.4
(22) Date of filing: 20.10.2015
(51) Int. Cl.: G06Q 50/00, G06Q 30/02

(54) **METHODS FOR GRANTING QUALIFICATION, METHOD FOR ACQUIRING QUALIFICATION, AND DEVICES THEREOF**

(30) Priority: 12.12.2014 CN 201410770939
(71) Applicant: Xiaomi Inc., Beijing 100085 (CN)
(72) Inventor: WANG, Yang, 100085 BEIJING (CN); CHEN, Changbing, 100085 BEIJING (CN); FU, Qiang, 100085 BEIJING (CN); HOU, Enxing, 100085 BEIJING (CN)
(74) Representative: Delumeau, François Guy

(57) **Abstract**

The present disclosure relates to a method for granting a qualification, a method for acquiring a qualification, and devices thereof. The method includes: receiving (201) a qualification sharing request sent by a first account for a second account, the qualification sharing request being a request for granting the second account a prioritized application qualification to a target service; detecting (202) whether the first account has ever employed the target service; and if the first account has ever employed the target service, granting (203) the second account the prioritized application qualification to the target service. The present disclosure solves the problem of causing network congestion and even server crash in the related art, and achieves the effect of providing the target service to the second account without blindness, by sharing a prioritized application qualification with the second account by the first account which has ever employed the target service.

## Description

### TECHNICAL FIELD

The present disclosure relates to the field of the Internet technology, and more particularly, relates to methods for granting a qualification, a method for acquiring a qualification, and devices thereof.

### BACKGROUND

A server can provide various services for a user, such as services for purchasing articles, services for sending medals, or the like. A medal is a kind of virtual honor as we can receive in a video game, for example. The user may apply for and employ the services via an account registered in the server. However, since some services are supplied with a very limited quantity, the server can only provide such services for some accounts.

In the related art, the server starts receiving applications for a service at an appointed time. However, the number of the users who desire to apply for the service may be huge, and the server may receive a great number of application requests from different accounts within a short time period, which causes network congestion and even server crash.

### SUMMARY

To solve the problem of causing the network congestion and even server crash in the related art, embodiments of the present disclosure provide methods for granting a qualification, a method for acquiring a qualification, and devices thereof. The technical solutions are as follows.

According to a first aspect of embodiments of the present disclosure, a method for granting a qualification implemented by a server is provided. The method includes:
receiving a qualification sharing request sent by a first account for a second account, the qualification sharing request being a request for granting the second account a prioritized application qualification for a target service;
detecting whether the first account has ever employed the target service; and
if the first account has ever employed the target service, granting the second account the prioritized application qualification for the target service.

Optionally, the granting the second account the prioritized application qualification for the target service includes:
acquiring communication information of the second account according to the qualification sharing request; and
sending a prioritized application qualification code to the second account according to the communication information, the prioritized application qualification code including a permission to apply for the target service with priority.

Optionally, the target service is a service with a supplied quantity less than a demanded quantity.

According to a second aspect of embodiments of the present disclosure, a method for granting a qualification implemented by a terminal is provided. The method includes:
acquiring a service identification of a target service and communication information of a second account;
generating a qualification sharing request according to the service identification and the communication information, the qualification sharing request being a request for granting the second account a prioritized application qualification for the target service; and
sending the qualification sharing request to a server, the server being configured to grant the second account the prioritized application qualification for the target service upon detecting that a first account has ever employed the target service.

Optionally, the acquiring a service identification of a target service and communication information of a second account includes:
receiving a predetermined trigger signal triggered by a user to a target service that has been employed;
providing a qualification sharing interface corresponding to the target service; and
acquiring the service identification of the target service and the communication information of the second account according to the qualification sharing interface.

Optionally, the target service is a service with a supplied quantity less than a demanded quantity.

According to a third aspect of embodiments of the present disclosure, a method for granting a qualification is provided. The method includes:
receiving a qualification acquiring request sent by a second account, the qualification acquiring request being a request for acquiring a prioritized application qualification for a target service;
acquiring a friend relationship chain of the second account;
forwarding the qualification acquiring request to a first account corresponding to a friend in the friend relationship chain who has ever employed the target service; and
upon receipt of a qualification grant response sent by the first account, granting the second account the prioritized application qualification for the target service.

Optionally, the granting the second account the prioritized application qualification for the target service includes:
acquiring communication information of the second account according to the qualification acquiring request; and
sending a prioritized application qualification code to the second account according to the communication information, the prioritized application qualification code including a permission to apply for the target service with priority.

Optionally, the target service is a service with a supplied quantity less than a demanded quantity.

According to a fourth aspect of embodiments of the present disclosure, a method for acquiring a qualification is provided. The method includes:
sending a qualification acquiring request to a server, the qualification acquiring request being a request for acquiring a prioritized application qualification for a target service; the server being configured to: upon acquiring a friend relationship chain of a second account, forward the qualification acquiring request to a first account corresponding to a friend in the friend relationship chain who has ever employed the target service, and upon receiving a qualification grant response sent by the first account, grant the second account the prioritized application qualification for the target service; and
acquiring the prioritized application qualification for the target service granted by the server.

Optionally, the acquiring the prioritized application qualification for the target service granted by the server includes:
receiving a prioritized application qualification code sent by the server, the prioritized application qualification code including a permission to apply for the target service with priority.

Optionally, the target service is a service with a supplied quantity less than a demanded quantity.

According to a fifth aspect of embodiments of the present disclosure, a method for granting a qualification is provided. The method includes:
receiving a qualification acquiring request forwarded by a server, the qualification acquiring request being a request for acquiring a prioritized application qualification for a target service; the qualification acquiring request being a request sent by a second account to the server, and forwarded by the server to a first account when the server detects that the first account has ever employed the target service, and the first account being an account corresponding to a friend in a friend relationship chain of the second account; and
sending a qualification grant response to the server, the server being configured to, upon receiving the qualification grant response, grant the second account the prioritized application qualification for the target service.

Optionally, the target service is a service with a supplied quantity less than a demanded quantity.

According to a sixth aspect of embodiments of the present disclosure, a device for granting a qualification is provided. The device includes:
a request receiving module, configured to receive a qualification sharing request sent by a first account for a second account, the qualification sharing request being a request for granting the second account a prioritized application qualification for a target service;
an account detecting module, configured to detect whether the first account has ever employed the target service; and
a qualification granting module, configured to grant the second account the prioritized application qualification for the target service if the account detecting module detects that the first account has ever employed the target service.

Optionally, the qualification granting module includes:
a communication information acquiring sub-module, configured to acquire communication information of the second account according to the qualification sharing request; and
a qualification granting sub-module, configured to send a prioritized application qualification code to the second account according to the communication information acquired by the communication information acquiring sub-module, the prioritized application qualification code including a permission to apply for the target service with priority.

Optionally, the target service is a service with a supplied quantity less than a demanded quantity.

According to a seventh aspect of embodiments of the present disclosure, a device for granting a qualification is provided. The device includes:
an information acquiring module, configured to acquire a service identification of a target service and communication information of a second account;
a request generating module, configured to generate a qualification sharing request according to the service identification and the communication information, the qualification sharing request being a request for granting the second account a prioritized application qualification for the target service; and
a request sending module, configured to send the qualification sharing request generated by the request generating module to a server; the server being configured to grant the second account the prioritized application qualification for the target service upon detecting that a first account has ever employed the target service.

Optionally, the information acquiring module includes:
a signal receiving sub-module, configured to receive a predetermined trigger signal triggered by a user to a target service that has been employed;
an interface providing sub-module, configured to provide a qualification sharing interface corresponding to the target service; and
an information acquiring sub-module, configured to acquire the service identification of the target service and the communication information of the second account according to the qualification sharing interface provided by the interface providing sub-module.

Optionally, the target service is a service with a supplied quantity less than a demanded quantity.

According to an eighth aspect of embodiments of the present disclosure, a device for granting a qualification is provided. The device includes:
a request receiving module, configured to receive a qualification acquiring request sent by a second account, the qualification acquiring request being a request for acquiring a prioritized application qualification for a target service;
a relationship chain acquiring module, configured to acquire a friend relationship chain of the second account;
a request forwarding module, configured to forward the qualification acquiring request to a first account corresponding to a friend in the friend relationship chain who has ever employed the target service; and
a qualification granting module, configured to, upon receiving a qualification grant response sent by the first account, grant the second account the prioritized application qualification for the target service.

Optionally, the qualification granting module includes:
a communication information acquiring sub-module, configured to acquire communication information of the second account according to the qualification acquiring request; and
a qualification granting sub-module, configured to send a prioritized application qualification code to the second account according to the communication information, the prioritized application qualification code including a permission to apply for the target service with priority.

Optionally, the target service is a service with a supplied quantity less than a demanded quantity.

According to a ninth aspect of embodiments of the present disclosure, a device for acquiring a qualification is provided. The device includes:
a request sending module, configured to send a qualification acquiring request to a server, the qualification acquiring request being a request for acquiring a prioritized application qualification for a target service; the server being configured to: upon acquiring a friend relationship chain of a second account, forward the qualification acquiring request to a first account corresponding to a friend in the friend relationship chain who has ever employed the target service, and upon receiving a qualification grant response sent by the first account, grant the second account the prioritized application qualification for the target service; and
a qualification acquiring module, configured to acquire the prioritized application qualification for the target service granted by the server.

Optionally, the qualification acquiring module is further configured to receive a prioritized application qualification code sent by the server, the prioritized application qualification code including a permission to apply for the target service with priority.

Optionally, the target service is a service with a supplied quantity less than a demanded quantity.

According to a tenth aspect of embodiments of the present disclosure, a device for granting a qualification is provided. The device includes:
a request receiving module, configured to receive a qualification acquiring request forwarded by a server, the qualification acquiring request being a request for acquiring a prioritized application qualification for a target service; the qualification acquiring request being a request sent by a second account to the server, and forwarded by the server to a first account when the server detects that the first account has ever employed the target service, and the first account being an account corresponding to a friend in a friend relationship chain of the second account; and
a response sending module, configured to send a qualification grant response to the server, the server being configured to, upon receiving the qualification grant response, grant the second account the prioritized application qualification for the target service.

Optionally, the target service is a service with a supplied quantity less than a demanded quantity.

According to an eleventh aspect of embodiments of the present disclosure, a device for granting a qualification is provided. The device includes:
a processor; and
a memory for storing instructions executable by the processor;
wherein the processor is configured to perform:
   receiving a qualification sharing request sent by a first account for a second account, the qualification sharing request being a request for granting the second account a prioritized application qualification for a target service;
   detecting whether the first account has ever employed the target service; and
   if the first account has ever employed the target service, granting the second account the prioritized application qualification for the target service.

According to a twelfth aspect of embodiments of the present disclosure, a device for granting a qualification is provided. The device includes:
a processor; and
a memory for storing instructions executable by the processor;
wherein the processor is configured to perform:
   acquiring a service identification of a target service and communication information of a second account;
   generating a qualification sharing request according to the service identification and the communication information, the qualification sharing request being a request for granting the second account a prioritized application qualification for the target service; and
   sending the qualification sharing request to a server; the server being configured to grant the second account the prioritized application qualification for the target service upon detecting that a first account has ever employed the target service.

According to a thirteenth aspect of embodiments of the present disclosure, a device for granting a qualification is provided. The device includes:
a processor; and
a memory for storing instructions executable by the processor;
wherein the processor is configured to perform:
   receiving a qualification acquiring request sent by a second account, the qualification acquiring request being a request for acquiring a prioritized application qualification for a target service;
   acquiring a friend relationship chain of the second account;
   forwarding the qualification acquiring request to a first account corresponding to a friend in the friend relationship chain who has ever employed the target service; and
   upon receipt of a qualification grant response sent by the first account, granting the second account the prioritized application qualification for the target service.

According to a fourteenth aspect of embodiments of the present disclosure, a device for acquiring a qualification is provided. The device includes:
a processor; and
a memory for storing instructions executable by the processor;
wherein the processor is configured to perform:
   sending a qualification acquiring request to a server, the qualification acquiring request being a request for acquiring a prioritized application qualification for a target service; the server being configured to: upon acquiring a friend relationship chain of a second account, forward the qualification acquiring request to a first account corresponding to a friend in the friend relationship chain who has ever employed the target service, and upon receiving a qualification grant response sent by the first account, grant the second account the prioritized application qualification for the target service; and
   acquiring the prioritized application qualification for the target service granted by the server.

According to a fifteenth aspect of embodiments of the present disclosure, a device for granting a qualification is provided. The device includes:
a processor; and
a memory for storing instructions executable by the processor;
wherein the processor is configured to perform:
   receiving a qualification acquiring request forwarded by a server, the qualification acquiring request being a request for acquiring a prioritized application qualification for a target service; the qualification acquiring request being a request sent by a second account to the server, and forwarded by the server to a first account when the server detects that the first account has ever employed the target service, and the first account being an account corresponding to a friend in a friend relationship chain of the second account; and
   sending a qualification grant response to the server, the server being configured to, upon receiving the qualification grant response, grant the second account the prioritized application qualification for the target service.

Computer programs are provided according to a sixteenth and a seventeenth aspect of the present disclosure. The computer programs respectively perform the steps of the method for granting a qualification when this program is executed by a server and the steps of the method for granting a qualification when this program is executed by a terminal as mentioned above according to the first and the second aspect of the present disclosure.

These programs can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided in the embodiments of the present disclosure may achieve the following beneficial effects:
A qualification sharing request sent by a first account for a second account is received, it is detected whether the first account has ever employed a target service, and if the first account has ever employed the target service, the second account is granted the prioritized application qualification for the target service. This solves the problem of causing network congestion and even server crash in the related art, and achieves the effect of providing the target service to the second account without blindness, by sharing a prioritized application qualification with the second account by the first account which has ever employed the target service.

It shall be appreciated that the above general description and the detailed description hereinafter are only illustrative and interpretative but not for limiting the present disclosure.

### BRIEF DESCRIPTION OF THE DRAWINGS

The accompanying drawings herein, which are incorporated into and constitute a part of the specification, illustrate embodiments consistent with the present disclosure, and together with the specification, serve to explain the principles of the present disclosure.
Fig. 1 is a schematic structural diagram illustrating an implementation environment according to exemplary embodiments of the present disclosure;
Fig. 2 is a flowchart illustrating a method for granting a qualification according to an exemplary embodiment of the present disclosure;
Fig. 3 is a flowchart illustrating a method for granting a qualification according to another exemplary embodiment of the present disclosure;
Fig. 4A is a flowchart illustrating a method for granting a qualification according to still another exemplary embodiment of the present disclosure;
Fig. 4B is a schematic diagram illustrating a display of a first terminal acquiring a service identification and communication information according to still another exemplary embodiment of the present disclosure;
Fig. 5A is a flowchart illustrating a method for granting a qualification according to still another exemplary embodiment of the present disclosure;
Fig. 5B is a flowchart illustrating a method for granting a qualification according to still another exemplary embodiment of the present disclosure;
Fig. 5C is a flowchart illustrating a method for granting a qualification according to still another exemplary embodiment of the present disclosure;
Fig. 6 is a flowchart illustrating a method for granting a qualification according to an exemplary embodiment of the present disclosure;
Fig. 7 is a flowchart illustrating a method for acquiring a qualification according to an exemplary embodiment of the present disclosure;
Fig. 8 is a flowchart illustrating a method for granting a qualification according to an exemplary embodiment of the present disclosure;
Fig. 9 is a flowchart illustrating a method for granting a qualification according to another exemplary embodiment of the present disclosure;
Fig. 10 is a block diagram illustrating a device for granting a qualification according to an exemplary embodiment of the present disclosure;
Fig. 11 is a block diagram illustrating a device for granting a qualification according to another exemplary embodiment of the present disclosure;
Fig. 12 is a block diagram illustrating a device for granting a qualification according to still another exemplary embodiment of the present disclosure;
Fig. 13 is a block diagram illustrating a device for granting a qualification according to yet still another exemplary embodiment of the present disclosure;
Fig. 14 is a block diagram illustrating a device for granting a qualification according to yet still another exemplary embodiment of the present disclosure;
Fig. 15 is a block diagram illustrating a device for granting a qualification according to yet still another exemplary embodiment of the present disclosure;
Fig. 16 is a block diagram illustrating a device for acquiring a qualification according to an exemplary embodiment of the present disclosure.
Fig. 17 is a block diagram illustrating a device for granting a qualification according to another exemplary embodiment of the present disclosure;
Fig. 18 is a block diagram illustrating a terminal according to an exemplary embodiment of the present disclosure; and
Fig. 19 is a block diagram illustrating a server according to an exemplary embodiment of the present disclosure.

Through the above accompany drawings, the specific embodiments of the present disclosure have been shown, for which a more detailed description will be given as below. These drawings and textual description are not intended to limit the scope of the concept of the present disclosure in any manner, but to explain the concept of the present disclosure to those skilled in the art through particular embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

For better understanding, several terms involved in all the embodiments of the present disclosure are briefly described first.

A target service refers to a service with a supplied quantity less than a demanded quantity. The target service may be a service for purchasing articles, a service for sending medals, a virtual network service, a virtual gift package service, or the like. For example, the target service is a service for purchasing mobile phones which may have a supplied quantity of 100,000, and a demanded quantity of more than 200,000. The user may apply for and employ the service via an account registered with a server.

A prioritized application qualification refers to a qualification of applying for a target service with priority. Optionally, if an ordinary account does not have an application qualification, the account having a prioritized application qualification has an application qualification. Alternatively, if both the ordinary account and the account having the prioritized application qualification have application qualifications, the server accepts the application from the account having a prioritized application qualification with a higher priority than it accepts the application from an ordinary account.

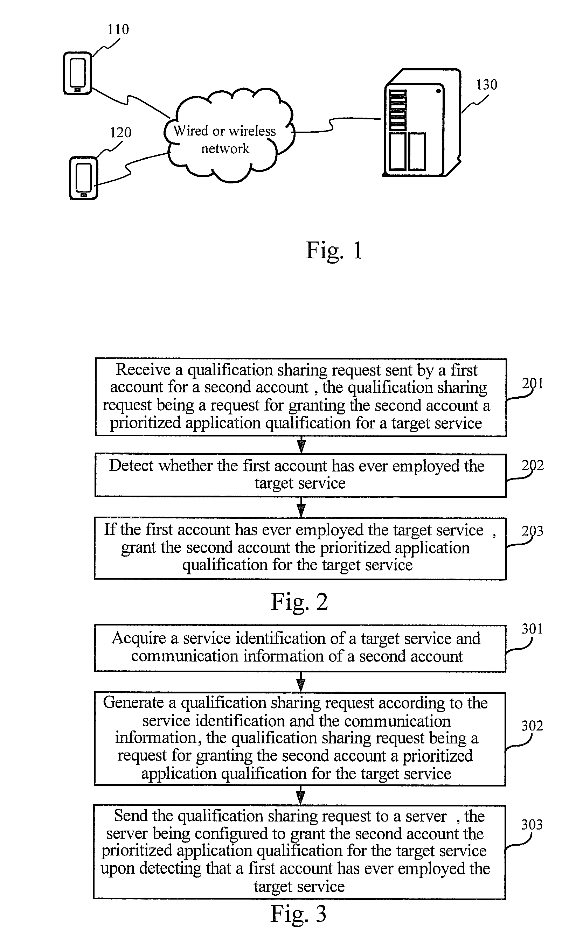

Referring to Fig. 1, which is a schematic structural diagram illustrating an implementation environment according to exemplary embodiments of the present disclosure. As illustrated in Fig. 1, the implementation environment may include: a first terminal 110 corresponding to a first account, a second terminal 120 corresponding to a second account, and a server 130.

The first terminal 110 or the second terminal 120 may be a terminal such as a mobile phone, a tablet computer, an electronic book reader, a laptop computer, a desktop computer, or a game console. The first terminal 110 and the second terminal 120 may be coupled to the server 130 via a wireless or wired network.

The server 130 may include a computer, or a plurality of computers, or a cloud computing center. The server 130 is configured to provide a target service for the first terminal 110 and the second terminal 120.

In the above implementation environment, a prioritized application qualification for a target service may be acquired by the second account using the following two methods:
Method 1: The first account may initiatively send a qualification sharing request for the second account, wherein the qualification sharing request is a request for granting the second account a prioritized application qualification for a target service; the server grants the second account the prioritized application qualification for the target service upon receiving a qualification sharing request and detecting that the first account has ever employed the target service.
Method 2: The second account may initiatively send a qualification acquiring request to the server, wherein the qualification acquiring request is a request for acquiring the prioritized application qualification for a target service. The server forwards the qualification acquiring request to the first account corresponding to a friend in a friend relationship chain who has ever employed the target service; and upon receiving a qualification grant response sent by the first account, grants the second account the prioritized application qualification for the target service.

The above two methods are described in the following different embodiments.

Referring to Fig. 2, which is a flowchart illustrating a method for granting a qualification according to an exemplary embodiment of the present disclosure. In the present embodiment, the method for granting a qualification is applied, for example, in the server 130 of Fig. 1. As illustrated in Fig. 2, the method for granting a qualification includes the following steps.

In step 201, a qualification sharing request sent by a first account for a second account is received, wherein the qualification sharing request is a request for granting the second account a prioritized application qualification for a target service.

In step 202, it is detected whether the first account has ever employed the target service.

In step 203, if the first account has ever employed the target service, the second account is granted the prioritized application qualification for the target service.

Accordingly, in the method for granting a qualification provided in the present embodiment, a qualification sharing request sent by a first account for a second account is received, it is detected whether the first account has ever employed a target service, and if the first account has ever employed the target service, the second account is granted the prioritized application qualification for the target service. This solves the problem of causing network congestion and even server crash in the related art, and achieves the effect of providing the target service to the second account without blindness, by sharing a prioritized application qualification with the second account by the first account which has ever employed the target service.

Referring to Fig. 3, which is a flowchart illustrating a method for granting a qualification according to another exemplary embodiment of the present disclosure. In the present embodiment, the method for granting a qualification is applied, for example, in the first terminal 110 of Fig. 1. As illustrated in Fig. 3, the method for granting a qualification includes the following steps.

In step 301, a service identification of a target service and communication information of a second account are acquired.

In step 302, a qualification sharing request is generated according to the service identification and the communication information, wherein the qualification sharing request is a request for granting the second account a prioritized application qualification for the target service.

In step 303, the qualification sharing request is sent to a server, the server being configured to grant the second account the prioritized application qualification for the target service upon detecting that a first account has ever employed the target service.

Accordingly, in the method for granting a qualification provided in the present embodiment, a first account acquires a service identification of a target service and communication information of a second account, a qualification sharing request is generated according to the service identification and the communication information, and the qualification sharing request is sent to a server. This solves the problem of causing network congestion and even server crash in the related art, and achieves the effect of providing the target service to the second account without blindness, by sharing a prioritized application qualification with the second account by the first account which has ever employed the target service.

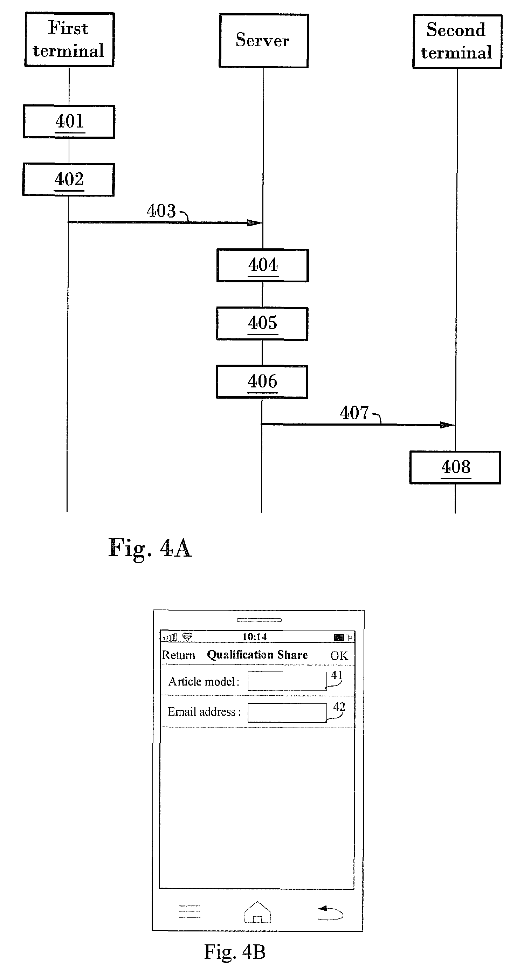

Referring to Fig. 4A, which is a flowchart illustrating a method for granting a qualification according to still another exemplary embodiment of the present disclosure. In the present embodiment, the method for granting a qualification is applied, for example, in the implementation environment of Fig. 1. As illustrated in Fig. 4A, the method for granting a qualification may include the following steps.

In step 401, a first terminal acquires a service identification of a target service and communication information of a second account.

The first terminal is a terminal corresponding to a first account. In other words, a client which is logged in with the first account is run on the first terminal. The first terminal acquires the service identification of the target service and the communication information of the second account.

The communication information of the second account may be a telephone number, an Email address, an instant communication account, or the like.

If the second account is itself a communication account, or a server stores the communication information of the second account, the first terminal may take an account identification of the second account as the communication information of the second account.

The step of acquiring the service identification of the target service and the communication information of the second account by the first terminal includes: the first terminal displays an identification input box, and the service identification of the target service input by a user in the identification input box is received.

The step of acquiring the communication information of the second account by the first terminal includes: the second terminal displays a communication information input box, and the communication information of the second account input by a user in the communication information input box is received.

Referring to Fig. 4B, the first terminal displays an identification input box 41 and a communication information input box 42. Assuming that the target service is a service of purchasing an article A, a user inputs the identification "a" of the article A in the identification input box 41, and inputs the instant communication number "6123456" of the second account in the communication information input box 42.

In step 402, the first terminal generates a qualification sharing request according to the service identification and the communication information, wherein the qualification sharing request is a request for granting the second account a prioritized application qualification for the target service.

The first terminal generates the qualification sharing request, wherein the qualification sharing request carries the service identification of the target service and the communication information of the second account.

In step 403, the first terminal sends the qualification sharing request to the server.

In step 404, the server receives a qualification sharing request sent by a first account for a second account, wherein the qualification sharing request is a request for granting the second account a prioritized application qualification for a target service.

In step 405, the server detects whether the first account has ever employed the target service.

The server parses out the service identification from the qualification sharing request. The server detects whether the first account has ever employed the target service corresponding to the service identification according to history access records of the first account.

If the history access records of the first account are stored in other servers, the server may send a access record query request related to the first account to other servers, then receive query results fed back by other servers, and detect whether the first account has ever employed the target service corresponding to the service identification according to the query results.

For example, in a case where the target service is the service of purchasing the article A, if the first account has ever purchased the article A, the server detects that the first account has ever purchased the article A.

In step 406, if the first account has ever employed the target service, the server acquires the communication information of the second account according to the qualification sharing request.

The server further parses out the communication information of the second account from the qualification sharing request.

If the qualification sharing request carries the account identification of the second account, the server queries for the communication information corresponding to the account identification of the second account among the stored communication information of all the accounts. The communication information of the second account may be a telephone number, an Email address, an instant communication account, or the like.

In step 407, the server sends a prioritized application qualification code to the second account according to the communication information, wherein the prioritized application qualification code includes a permission to apply for the target service with priority.

The prioritized application qualification may be indicated by a prioritized application qualification code. The prioritized application qualification code may be a fixed length of character string generated by the server. When applying for the target service, the second account may input the prioritized application qualification code to identify the prioritized application qualification to the server.

The server generates the prioritized application qualification code, and sends the prioritized application qualification code to the second account according to the communication information of the second account.

In step 408, the second terminal receives the prioritized application qualification code sent by the server.

It should be further noted that, in the present embodiment, as an example, a server sends a prioritized application qualification code to a second account upon detecting that the first account has ever employed a target service. Optionally, the server may further detect the number of qualification sharing requests sent by the first account for a same service. If the number of qualification sharing requests reaches a maximum value, even if detecting that the first account has ever employed the target service, the server may not send the prioritized application qualification code to the second account. Specifically, the server may further perform the following steps prior to step 406: corresponding to the same service, detecting, by the server, whether the number of received qualification sharing requests sent by the first account reaches the maximum value; and if the number of received qualification sharing requests sent by the first account does not reach the maximum value, performing step 406. This is not limited in the present embodiment.

Accordingly, in the method for granting a qualification provided in the present embodiment, a first account acquires a service identification of a target service and communication information of a second account, a qualification sharing request is generated according to the service identification and the communication information, and the qualification sharing request is sent to a server. This solves the problem of causing network congestion and even server crash in the related art, and achieves the effect of providing the target service to the second account without blindness, by sharing a prioritized application qualification with the second account by the first account which has ever employed the target service.

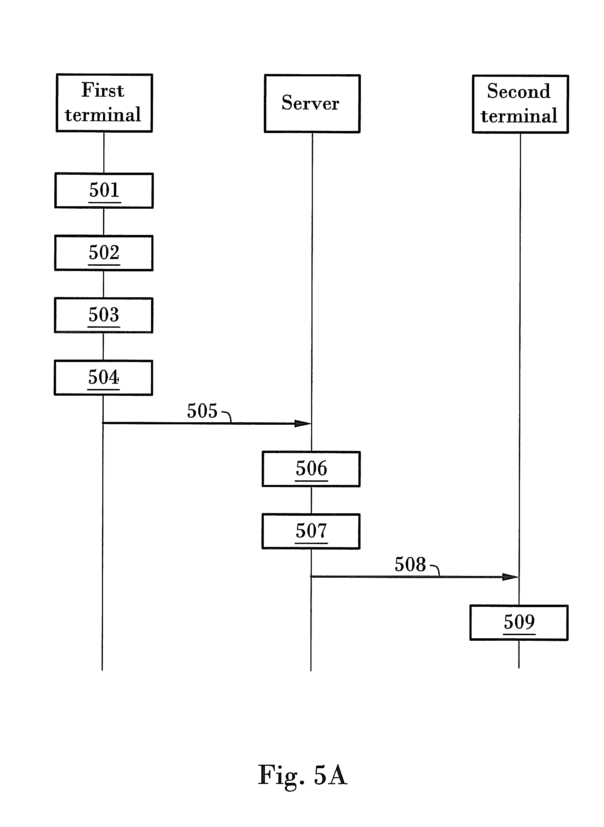

Referring to Fig. 5A, which is a flowchart illustrating a method for granting a qualification according to yet still another exemplary embodiment of the present disclosure. In the present embodiment, the method for granting a qualification is applied, for example, in the implementation environment of Fig. 1. As illustrated in Fig. 5A, the method for granting a qualification may include the following steps.

In step 501, a first terminal receives a predetermined trigger signal triggered by a user to a target service that has been employed.

The first terminal is a terminal corresponding to a first account. In other words, a client which is logged in with the first account is run on the first terminal.

The first terminal may store history access records of the first account. A user may check the history access records, and trigger a predetermined trigger signal for the target service that has been employed. The predetermined trigger signal may be a long press signal.

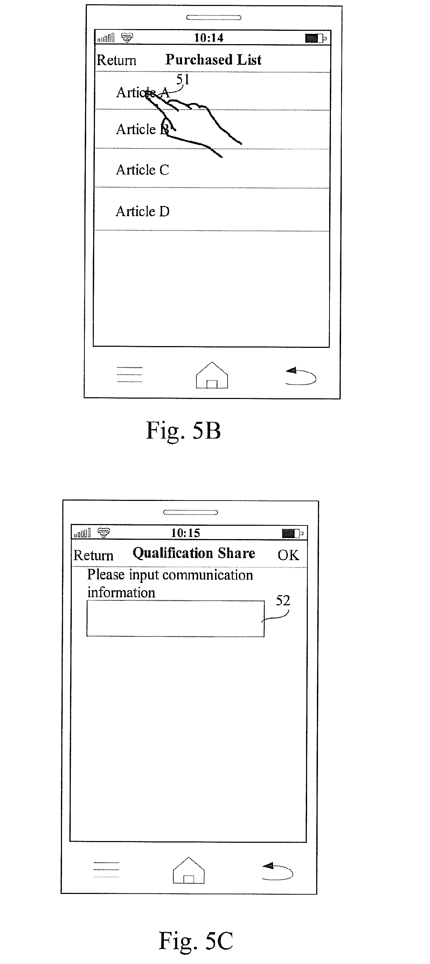

Referring to Fig. 5B, assuming that the target service is a service of purchasing an article A, and the first terminal stores the history access records of the first account, a user may check the history access records, and long press a history access record 51 of the article A, thereby triggering the predetermined trigger signal.

In step 502, the first terminal provides a qualification sharing interface corresponding to the target service.

The first terminal provides a qualification sharing interface corresponding to the target service upon receiving the predetermined trigger signal. The qualification sharing interface includes a communication information input box.

Referring to Fig. 5C, the first terminal displays a communication information input box 52, wherein the communication information input box 52 is for receiving communication information input by a user.

In step 503, the first terminal acquires a service identification of the target service and communication information of a second account according to the qualification sharing interface.

The first terminal acquires the service identification of the target service upon receiving the predetermined trigger signal and displaying the qualification sharing interface. For example, when a user long presses on an article A in Fig. 5B, the first terminal acquires an article identification "a" of the article A.

After the user inputs communication information in an input box on the qualification sharing interface, the first terminal determines the communication information input by the user as the communication information of the second account. For example, when the user inputs a telephone number 13812345678 in the communication information input box 52, the first terminal may take the telephone number 13812345678 as the communication information of the second account.

In step 504, the first terminal generates a qualification sharing request according to the service identification and the communication information, wherein the qualification sharing request is a request for granting the second account a prioritized application qualification for the target service.

The first terminal generates the qualification sharing request, wherein the qualification sharing request carries the service identification of the target service and the communication information of the second account.

In step 505, the first terminal sends the qualification sharing request to the server.

In step 506, the server receives a qualification sharing request sent by a first account for a second account, wherein the qualification sharing request is a request for granting the second account a prioritized application qualification for a target service.

In step 507, the server acquires the communication information of the second account according to the qualification sharing request.

The server further parses out the communication information of the second account from the qualification sharing request.

If the qualification sharing request carries the account identification of the second account, the server queries for the communication information corresponding to the account identification of the second account among the stored communication information of all the accounts. The communication information of the second account may be a telephone number, an Email address, an instant communication account, or the like.

In step 508, the server sends a prioritized application qualification code to the second account according to the communication information, wherein the prioritized application qualification code includes a permission to apply for the target service with priority.

The prioritized application qualification may be indicated by a prioritized application qualification code. The prioritized application qualification code may be a fixed length of character string generated by the server. When applying for the target service, the second account may input the prioritized application qualification code to indicate the prioritized application qualification to the server.

The server generates the prioritized application qualification code, and sends the prioritized application qualification code to the second account according to the communication information of the second account.

In step 509, the second terminal receives the prioritized application qualification code sent by the server.

Accordingly, in the method for granting a qualification provided in the present embodiment, a first account acquires a service identification of a target service and communication information of a second account, a qualification sharing request is generated according to the service identification and the communication information, and the qualification sharing request is sent to a server. This solves the problem of causing network congestion and even server crash in the related art, and achieves the effect of providing the target service to the second account without blindness, by sharing a prioritized application qualification with the second account by the first account which has ever employed the target service.

It should be further noted that, in the present embodiment, only as an example, a server directly acquires communication information of a second account upon receiving a qualification sharing request sent by a first account, and sends a prioritized application qualification code to the second account. Optionally, to prevent a circumstance where the server may also send a prioritized application qualification code to the second account upon receiving a false qualification sharing request sent by an unauthorized user, the server may still detect whether the first account has ever employed the target service upon receiving the qualification sharing request sent by the first account. This is not limited in the present embodiment. In addition, prior to detecting whether the first account has ever employed the target service, the server may further perform the following steps: corresponding to the same service, detecting, by the server, whether the number of received qualification sharing requests reaches the maximum value; and if the number of the received qualification sharing requests does not reach the maximum value, performing the above detection step. This is not limited in the present embodiment.

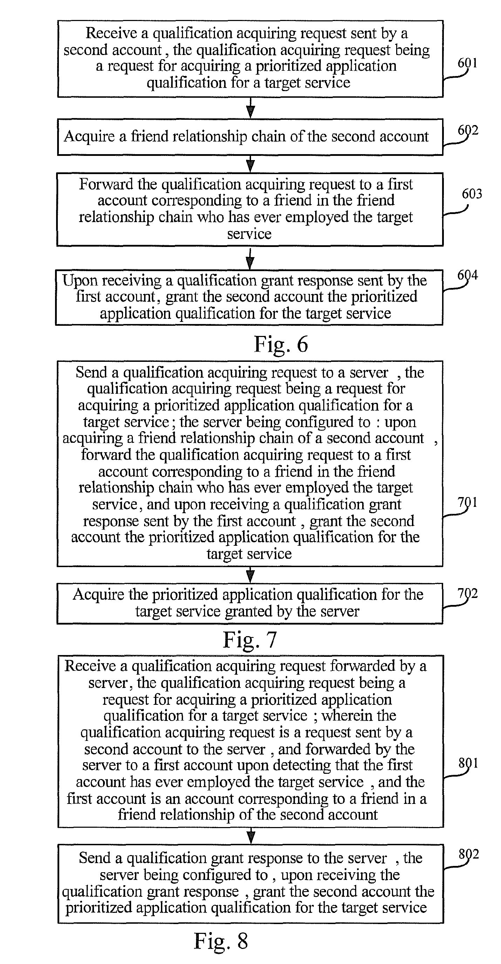

Referring to Fig. 6, which is a flowchart illustrating a method for granting a qualification according to still another exemplary embodiment of the present disclosure. In the present embodiment, the method for granting a qualification is applied, for example, in the server 130 as illustrated in Fig. 6. As illustrated in Fig. 6, the method for granting a qualification may include the following steps.

In step 601, a qualification acquiring request sent by a second account is received, wherein the qualification acquiring request is a request for acquiring a prioritized application qualification for a target service.

In step 602, a friend relationship chain of the second account is acquired.

In step 603, the qualification acquiring request is forwarded to a first account corresponding to a friend in the friend relationship chain who has ever employed the target service.

In step 604, upon receipt of a qualification grant response sent by the first account, the second account is granted the prioritized application qualification for the target service.

Accordingly, in the method for granting a qualification provided in the present embodiment, a qualification acquiring request sent by a second account is forwarded to a first account corresponding to a friend in a friend relationship chain who has ever employed a target service; and upon receipt of a qualification grant response sent by the first account, a second account is granted a prioritized application qualification for the target service. This solves the problem of causing network congestion and even server crash in the related art, and achieves the effect of providing the target service to the second account without blindness, by sharing a prioritized application qualification with the second account by the first account which has ever employed the target service.

Referring to Fig. 7, which is a flowchart illustrating a method for acquiring a qualification according to another embodiment of the present disclosure. In the present embodiment, the method for acquiring a qualification is applied, for example, in the second terminal 120 of Fig. 1. As illustrated in Fig. 7, the method for acquiring a qualification may include the following steps.

In step 701, a qualification acquiring request is sent to a server, the qualification acquiring request being a request for acquiring a prioritized application qualification for a target service; the server being configured to: upon acquiring a friend relationship chain of a second account, forward the qualification acquiring request to a first account corresponding to a friend in the friend relationship chain who has ever employed the target service, and upon receiving a qualification grant response sent by the first account, grant the second account the prioritized application qualification for the target service.

In step 702, the prioritized application qualification for the target service granted by the server is acquired.

Accordingly, in the method for granting a qualification provided in the present embodiment, an qualification acquiring request is sent to a server and forwarded by the server to a first account corresponding to a friend in a friend relationship chain who has ever employed a target service; upon receipt of a qualification grant response sent by the first account, a second account is granted a prioritized application qualification; and correspondingly, the second account acquires the prioritized application qualification granted by the server. This solves the problem of causing network congestion and even server crash in the related art, and achieves the effect of providing the target service to the second account without blindness, by sharing a prioritized application qualification with the second account by the first account which has ever employed the target service.

Referring to Fig. 8, which is a flowchart illustrating a method for granting a qualification according to still another exemplary embodiment of the present disclosure. In the present embodiment, the method for granting a qualification is applied, for example, in the first terminal 110 of Fig. 1. As illustrated in Fig. 8, the method for granting a qualification may include the following steps.

In step 801, a qualification acquiring request forwarded by a server is received, the qualification acquiring request being a request for acquiring a prioritized application qualification for a target service; wherein the qualification acquiring request is a request sent by a second account to the server, and forwarded by the server to a first account upon detecting that the first account has ever employed the target service, and the first account is an account corresponding to a friend in a friend relationship of the second account.

In step 802, a qualification grant response is sent to the server, the server being configured to, upon receiving the qualification grant response, grant the second account the prioritized application qualification for the target service.

Accordingly, in the method for granting a qualification provided in the present embodiment, a qualification acquiring request sent by a server is received, wherein the qualification acquiring request is a request sent by a second account to the server, and forwarded by the server to a first account upon detecting that the first account has ever employed the target service; and a qualification grant response is sent to the server, such that the server grants the second account a prioritized application qualification for the target service upon receiving of the qualification grant response. This solves the problem of causing network congestion and even server crash in the related art, and achieves the effect of providing the target service to the second account without blindness, by sharing a prioritized application qualification with the second account by the first account which has ever employed the target service.

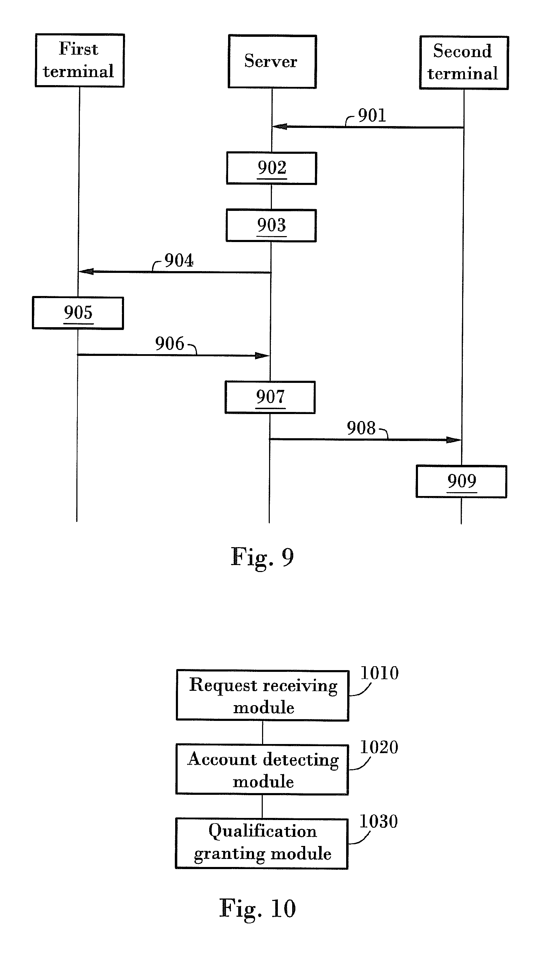

Referring to Fig. 9, which is a flowchart illustrating a method for granting a qualification according to yet still another exemplary embodiment of the present disclosure. In the present embodiment, the method for granting a qualification is applied, for example, in the implementation environment of Fig. 1. As illustrated in Fig. 9, the method for granting a qualification may include the following steps.

In step 901, a second terminal sends a qualification acquiring request to a server.

The second terminal is a terminal corresponding to a second account. In other words, a client which is logged in with the second account is run on the second terminal. The second terminal sends the qualification acquiring request to the server.

The qualification acquiring request is a request for acquiring a prioritized application qualification for a target service. The qualification acquiring request carries a service identification of the target service.

In step 902, the server receives a qualification acquiring request sent by a second account, wherein the qualification acquiring request is a request for acquiring a prioritized application qualification for a target service.

In step 903, the server acquires a friend relationship chain of the second account.

The server further parses out communication information of the second account from the qualification acquiring request. The communication information may be a telephone number, an Email address, an instant communication account, or the like. The server acquires a friend relationship chain of the second account according to the communication information of the second account.

If the friend relationship chain of the second account is stored in other servers, the server may send a query request related to the friend relationship chain to other servers, and then receive friend relationship chains fed back by other servers.

For example, if the communication information of the second account is an Email address abcd@164.com, the server acquires the friend relationship chain of the Email address abcd@164.com.

In step 904, the server forwards the qualification acquiring request to a first account corresponding to a friend in the friend relationship chain who has ever employed the target service.

The server parses out the service identification of the target service from the qualification acquiring request. The server detects, according to the service identification, which friend in the friend relationship chain has ever employed the target service, and forwards the qualification acquiring request to the first account corresponding to the friend.

If the history access records of all the friends are stored in other servers, the server may send access record query requests related to all the friends to the servers, receive query results fed back by the servers, and detect whether all the friends have ever employed the target service corresponding to the service identification according to the query results.

In step 905, a first terminal receives the qualification acquiring request forwarded by the server.

In step 906, the first terminal sends a qualification grant response to the server.

If agreed to grant the second account the prioritized application qualification for the target service, the first terminal may send the qualification grant response to the server.

In step 907, upon receiving the qualification grant response sent by the first account, the server acquires the communication information of the second account according to the qualification acquiring request.

Correspondingly, upon receiving the qualification grant response, the server acquires the communication information of the second account according to the qualification acquiring request.

The server further parses out communication information of the second account from the qualification acquiring request. The communication information may be a telephone number, an Email address, an instant communication account, or the like.

If the communication information of the second account has been parsed out in step 903, the server may directly read the communication information of the second account acquired previously, which is not limited in the present embodiment.

In step 908, the server sends a prioritized application qualification code to the second account according to the communication information, wherein the prioritized application qualification code includes a permission to apply for the target service with priority.

The prioritized application qualification may be indicated by a prioritized application qualification code. The prioritized application qualification code may be a fixed length of character string generated by the server. When applying for the target service, the second account may input the prioritized application qualification code to indicate the prioritized application qualification to the server.

The server generates the prioritized application qualification code, and sends the prioritized application qualification code to the second account according to the communication information of the second account.

In step 909, the second terminal receives the prioritized application qualification code sent by the server.

It should be further noted that, prior to step 907, the server may further perform the following steps prior to step 907: corresponding to the same service, detecting, by the server, whether the number of received qualification grant responses sent by the first account reaches the maximum value; and if the number of received qualification grant responses sent by the first account does not reach the maximum value, performing step 907, and otherwise, ending the process, which is not limited in the present embodiment.

Accordingly, in the method for granting a qualification provided in the present embodiment, a qualification acquiring request sent by a second account is forwarded to a first account corresponding to a friend in a friend relationship chain who has ever employed a target service; and upon receipt of a qualification grant response sent by the first account, a second account is granted a prioritized application qualification for the target service. This solves the problem of causing network congestion and even server crash in the related art, and achieves the effect of providing the target service to the second account without blindness, by sharing a prioritized application qualification with the second account by the first account which has ever employed the target service.

Devices embodiments of the present disclosure are described hereinafter, wherein the devices may be used to perform the method embodiments. Details that are not disclosed in the device embodiments of the present disclosure, reference may be made to the method embodiments of the present disclosure.

Referring to Fig. 10, which is a structural block diagram illustrating a device for granting a qualification according to an exemplary embodiment of the present disclosure. In the present embodiment, the device for granting a qualification is applied, for example, in the server 130 of Fig. 1. As illustrated in Fig. 10, the device for granting a qualification may include: a request receiving module 1010, an account detecting module 1020, and a qualification granting module 1030.

The request receiving module 1010 is configured to receive a qualification sharing request sent by a first account for a second account, the qualification sharing request being a request for granting the second account a prioritized application qualification for a target service.

The account detecting module 1020 is configured to detect whether the first account has ever employed the target service.

The qualification granting module 1030 is configured to grant the second account the prioritized application qualification for the target service if the account detecting module 1020 detects that the first account has ever employed the target service.

Accordingly, in the device for granting a qualification provided in the present embodiment, a qualification sharing request sent by a first account for a second account is received, it is detected whether the first account has ever employed a target service, and if the first account has ever employed the target service, the second account is granted the prioritized application qualification for the target service. This solves the problem of causing network congestion and even server crash in the related art, and achieves the effect of providing the target service to the second account without blindness, by sharing a prioritized application qualification with the second account by the first account which has ever employed the target service.

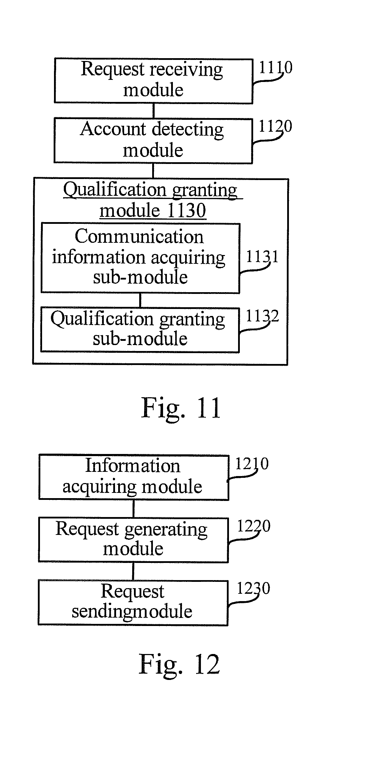

Referring to Fig. 11, which is a structural block diagram illustrating a device for granting a qualification according to another exemplary embodiment of the present disclosure. In the present embodiment, the device for granting a qualification is applied, for example, in the server 130 of Fig. 1. As illustrated in Fig. 11, the device for granting a qualification may include: a request receiving module 1110, an account detecting module 1120, and a qualification granting module 1130.

The request receiving module 1110 is configured to receive a qualification sharing request sent by a first account for a second account, the qualification sharing request being a request for granting the second account a prioritized application qualification for a target service.

The account detecting module 1120 is configured to detect whether the first account has ever employed the target service.

The qualification granting module 1130 is configured to grant the second account the prioritized application qualification for the target service if the account detecting module 1120 detects that the first account has ever employed the target service.

Optionally, the qualification granting module 1130 includes:
a communication information acquiring sub-module 1131, configured to acquire communication information of the second account according to the qualification sharing request; and
a qualification granting sub-module 1132, configured to send a prioritized application qualification code to the second account according to the communication information acquired by the communication information acquiring sub-module 1131, the prioritized application qualification code including a permission to apply for the target service with priority.

Accordingly, in the device for granting a qualification provided in the present embodiment, a qualification sharing request sent by a first account for a second account is received, it is detected whether the first account has ever employed a target service, and if the first account has ever employed the target service, the second account is granted the prioritized application qualification for the target service. This solves the problem of causing network congestion and even server crash in the related art, and achieves the effect of providing the target service to the second account without blindness, by sharing a prioritized application qualification with the second account by the first account which has ever employed the target service.

Referring to Fig. 12, which is a structural block diagram illustrating a device for granting a qualification according to still another exemplary embodiment of the present disclosure. In the present embodiment, the device for granting a qualification is applied, for example, in the first terminal 110 of Fig. 1. As illustrated in Fig. 12, the device for granting a qualification may include: an information acquiring module 1210, a request generating module 1220, and a request sending module 1230.

The information acquiring module 1210 is configured to acquire a service identification of a target service and communication information of a second account.

The request generating module 1220 is configured to generate a qualification sharing request according to the service identification and the communication information, the qualification sharing request being a request for granting the second account a prioritized application qualification for the target service.

The request sending module 1230 is configured to send the qualification sharing request generated by the request generating module 1220 to a server; the server being configured to grant the second account the prioritized application qualification for the target service upon detecting that a first account has ever employed the target service.

Accordingly, in the device for granting a qualification provided in the present embodiment, a first account acquires a service identification of a target service and communication information of a second account, a qualification sharing request is generated according to the service identification and the communication information, and the qualification sharing request is sent to a server. This solves the problem of causing network congestion and even server crash in the related art, and achieves the effect of providing the target service to the second account without blindness, by sharing a prioritized application qualification with the second account by the first account which has ever employed the target service.

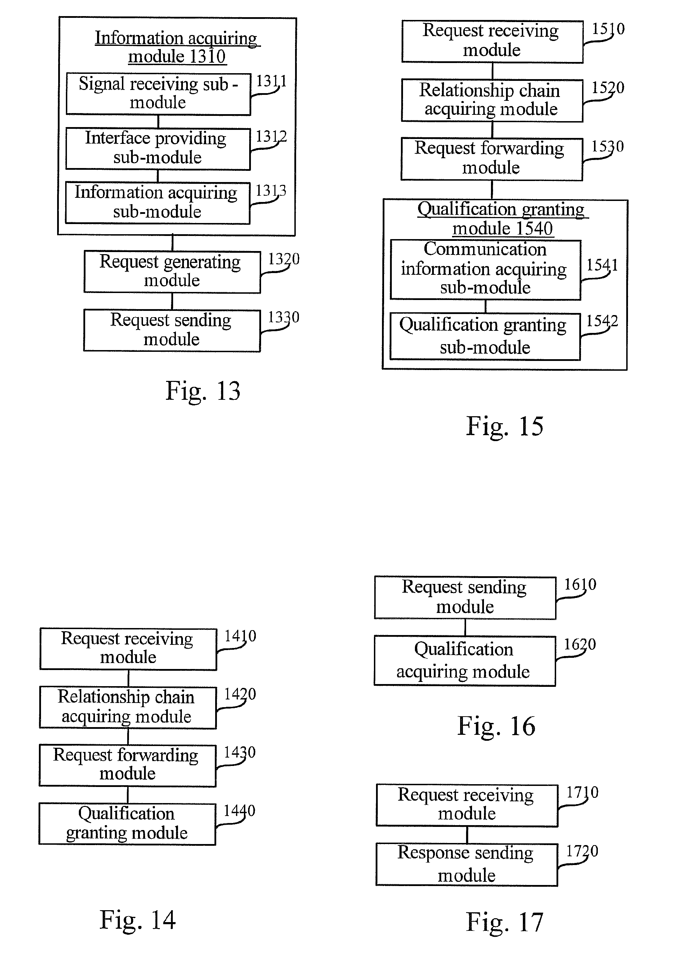

Referring to Fig. 13, which is a structural block diagram illustrating a device for granting a qualification according to yet still another exemplary embodiment of the present disclosure. In the present embodiment, the device for granting a qualification is applied, for example, in the first terminal 110 of Fig. 1. As illustrated in Fig. 13, the device for granting a qualification may include: an information acquiring module 1310, a request generating module 1320, and a request sending module 1330.

The information acquiring module 1310 is configured to acquire a service identification of a target service and communication information of a second account.

The request generating module 1320 is configured to generate a qualification sharing request according to the service identification and the communication information, the qualification sharing request being a request for granting the second account a prioritized application qualification for the target service.

The request sending module 1330 is configured to send the qualification sharing request generated by the request generating module 1320 to a server; the server being configured to grant the second account the prioritized application qualification for the target service upon detecting that a first account has ever employed the target service.

Optionally, the information acquiring module 1310 includes:
a signal receiving sub-module 1311, configured to receive a predetermined trigger signal triggered by a user to a target service that has been employed;
an interface providing sub-module 1312, configured to provide a qualification sharing interface corresponding to the target service; and
an information acquiring sub-module 1313, configured to acquire the service identification of the target service and the communication information of the second account according to the qualification sharing interface provided by the interface providing sub-module 1312.

Accordingly, in the device for granting a qualification provided in the present embodiment, a first account acquires a service identification of a target service and communication information of a second account, a qualification sharing request is generated according to the service identification and the communication information, and the qualification sharing request is sent to a server. This solves the problem of causing network congestion and even server crash in the related art, and achieves the effect of providing the target service to the second account without blindness, by sharing a prioritized application qualification with the second account by the first account which has ever employed the target service.

Referring to Fig. 14, which is a structural block diagram illustrating a device for granting a qualification according to yet still another exemplary embodiment of the present disclosure. In the present embodiment, the device for granting a qualification is applied, for example, in the server 130 of Fig. 1. As illustrated in Fig. 14, the device for granting a qualification may include: a request receiving module 1410, a relationship chain acquiring module 1420, a request forwarding module 1430, and a qualification granting module 1440.

The request receiving module 1410 is configured to receive a qualification acquiring request sent by a second account, the qualification acquiring request being a request for acquiring a prioritized application qualification for a target service.

The relationship chain acquiring module 1420 is configured to acquire a friend relationship chain of the second account.

The request forwarding module 1430 is configured to forward the qualification acquiring request to a first account corresponding to a friend in the friend relationship chain who has ever employed the target service.

The qualification granting module 1440 is configured to, upon receiving a qualification grant response sent by the first account, grant the second account the prioritized application qualification for the target service.

Accordingly, in the device for granting a qualification provided in the present embodiment, a qualification acquiring request sent by a second account is forwarded to a first account corresponding to a friend in a friend relationship chain who has ever employed a target service, and upon receipt of a qualification grant response sent by the first account, the second account is granted a prioritized application qualification for the target service. This solves the problem of causing network congestion and even server crash in the related art, and achieves the effect of providing the target service to the second account without blindness, by sharing a prioritized application qualification with the second account by the first account which has ever employed the target service.

Referring to Fig. 15, which is a structural block diagram illustrating a device for granting a qualification according to yet still another exemplary embodiment of the present disclosure. In the present embodiment, the device for granting a qualification is applied, for example, in the server 130 of Fig. 1. As illustrated in Fig. 15, the device for granting a qualification may include: a request receiving module 1510, a relationship chain acquiring module 1520, a request forwarding module 1530, and a qualification granting module 1540.

The request receiving module 1510 is configured to receive a qualification acquiring request sent by a second account, the qualification acquiring request being a request for acquiring a prioritized application qualification for a target service.

The relationship chain acquiring module 1520 is configured to acquire a friend relationship chain of the second account.

The request forwarding module 1530 is configured to forward the qualification acquiring request to a first account corresponding to a friend in the friend relationship chain who has ever employed the target service.

The qualification granting module 1540 is configured to, upon receiving a qualification grant response sent by the first account, grant the second account the prioritized application qualification for the target service.

Optionally, the qualification granting module 1540 includes:
a communication information acquiring sub-module 1541, configured to acquire communication information of the second account according to the qualification acquiring request; and
a qualification granting sub-module 1542, configured to send a prioritized application qualification code to the second account according to the communication information, the prioritized application qualification code including a permission to apply for the target service with priority.

Accordingly, in the device for granting a qualification provided in the present embodiment, a qualification acquiring request sent by a second account is forwarded to a first account corresponding to a friend in a friend relationship chain who has ever employed a target service, and upon receipt of a qualification grant response sent by the first account, the second account is granted a prioritized application qualification for the target service. This solves the problem of causing network congestion and even server crash in the related art, and achieves the effect of providing the target service to the second account without blindness, by sharing a prioritized application qualification with the second account by the first account which has ever employed the target service.

Referring to Fig. 16, which is a structural block diagram illustrating a device for acquiring a qualification according to an exemplary embodiment of the present disclosure. In the present embodiment, the device for acquiring a qualification is applied, for example, in the second terminal 120 of Fig. 1. As illustrated in Fig. 16, the device for acquiring a qualification may include: a request sending module 1610 and a qualification acquiring module 1620.

The request sending module 1610 is configured to send a qualification acquiring request to a server, the qualification acquiring request being a request for acquiring a prioritized application qualification for a target service; the server being configured to: upon acquiring a friend relationship chain of a second account, forward the qualification acquiring request to a first account corresponding to a friend in the friend relationship chain who has ever employed the target service, and upon receiving a qualification grant response sent by the first account, grant the second account the prioritized application qualification for the target service.

The qualification acquiring module 1620 is configured to acquire the prioritized application qualification for the target service granted by the server.

Accordingly, in the device for granting a qualification provided in the present embodiment, an qualification acquiring request is sent to a server and forwarded by the server to a first account corresponding to a friend in a friend relationship chain who has ever employed a target service; upon receipt of a qualification grant response sent by the first account, a second account is granted a prioritized application qualification; and correspondingly, the second account acquires the prioritized application qualification granted by the server. This solves the problem of causing network congestion and even server crash in the related art, and achieves the effect of providing the target service to the second account without blindness, by sharing a prioritized application qualification with the second account by the first account which has ever employed the target service.

In an optional embodiment based on the above embodiment, the qualification acquiring module 1620 may be further configured to receive a prioritized application qualification code sent by the server, wherein the prioritized application qualification code includes a permission to apply for the target service with priority.

Accordingly, in the device for acquiring a qualification provided in the present embodiment, a qualification acquiring request sent by a server is received, wherein the qualification acquiring request is a request sent by a second account to the server, and forwarded by the server to a first account upon detecting that the first account has ever employed the target service; and a qualification grant response is sent to the server, such that the server grants the second account a prioritized application qualification for the target service upon receiving of the qualification grant response. This solves the problem of causing network congestion and even server crash in the related art, and achieves the effect of providing the target service to the second account without blindness, by sharing a prioritized application qualification with the second account by the first account which has ever employed the target service.

Referring to Fig. 17, which is a structural block diagram illustrating a device for granting a qualification according to yet still another exemplary embodiment of the present disclosure. In the present embodiment, the device for granting a qualification is applied, for example, in the first terminal 110 of Fig. 1. As illustrated in Fig. 17, the device for granting a qualification may include: a request receiving module 1710 and a response sending module 1720.

The request receiving module 1710 is configured to receive a qualification acquiring request forwarded by a server, the qualification acquiring request being a request for acquiring a prioritized application qualification for a target service; wherein the qualification acquiring request is a request sent by a second account to the server, and forwarded by the server to a first account upon detecting that the first account has ever employed the target service, and the first account is an account corresponding to a friend in a friend relationship of the second account.

The response sending module 1720 is configured to send a qualification grant response to the server, the server being configured to, upon receiving the qualification grant response, grant the second account the prioritized application qualification for the target service.

Accordingly, in the device for granting a qualification provided in the present embodiment, a qualification acquiring request sent by a server is received, wherein the qualification acquiring request is a request sent by a second account to the server, and forwarded by the server to a first account upon detecting that the first account has ever employed the target service; and a qualification grant response is sent to the server, such that the server grants the second account a prioritized application qualification for the target service upon receiving of the qualification grant response. This solves the problem of causing network congestion even server crash in the related art, and achieves the effect of providing the target service to the second account without blindness, by sharing a prioritized application qualification with the second account by the first account which has ever employed the target service.

With respect to the devices in the above embodiments, the specific implementations of operations executed by various modules thereof have been in detail described in the embodiments illustrating the methods, which are not described herein any further.

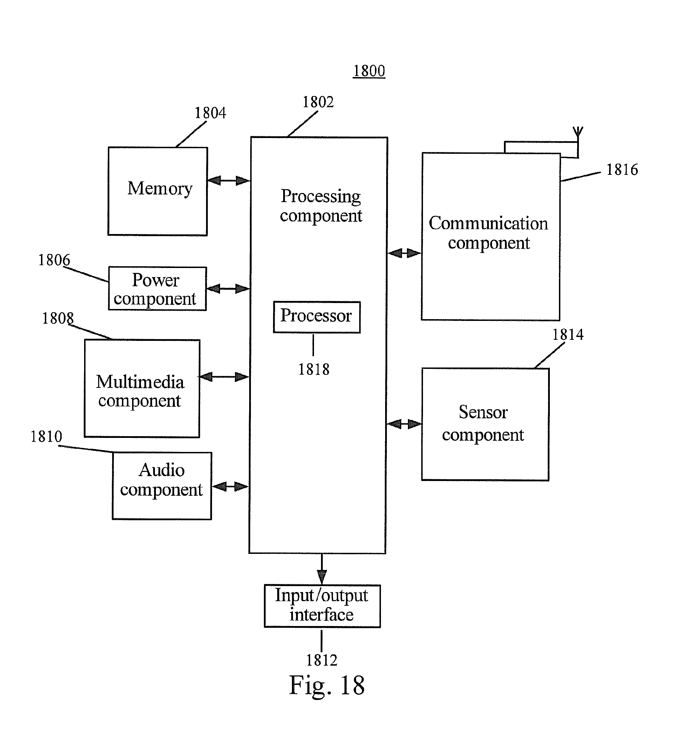

Fig. 18 is a block diagram illustrating a terminal 1800 according to an exemplary embodiment of the present disclosure. The terminal 1800 may be a first terminal corresponding to a first account or may be a second terminal corresponding to a second account in Fig. 1. For example, the terminal 1800 may be a mobile phone, a computer, a digital broadcast terminal, a messaging device, a gaming console, a tablet, a medical device, exercise equipment, a personal digital assistant, and the like.

Referring to Fig. 18, the terminal 1800 may include one or more of the following components: a processing component 1802, a memory 1804, a power component 1806, a multimedia component 1808, an audio component 1810, an input/output (I/O) interface 1812, a sensor component 1814, and a communication component 1816.

The processing component 1802 typically controls overall operations of the terminal 1800, such as the operations associated with display, telephone calls, data communications, camera operations, and recording operations. The processing component 1802 may include one or more processors 1818 to execute instructions to perform all or a part of the steps in the above-described methods. In addition, the processing component 1802 may include one or more modules which facilitate the interaction between the processing component 1802 and other components. For example, the processing component 1802 may include a multimedia module to facilitate the interaction between the multimedia component 1808 and the processing component 1802.

The memory 1804 is configured to store various types of data to support the operations of the terminal 1800. Examples of such data include instructions for any application or method operated on the terminal 1800, contact data, phonebook data, messages, pictures, videos, and the like. The memory 1804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1806 provides power to various components of the terminal 1800. The power component 1806 may include a power management system, one or more power supplies, and other components associated with the generation, management, and distribution of power in the terminal 1800.

The multimedia component 1808 includes a screen providing an output interface between the terminal 1800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1808 includes a front camera and/or a rear camera. The front camera and/or the rear camera may receive external multimedia data while the terminal 1800 is in an operation mode, such as a photographing mode or a video mode. Each of the front camera and the rear camera may be a fixed optical lens system or have focus and optical zoom capability.

The audio component 1810 is configured to output and/or input audio signals. For example, the audio component 1810 includes a microphone (MIC) configured to receive an external audio signal when the apparatus 1800 is in an operation mode, such as a call mode, a recording mode, or a voice recognition mode. The received audio signal may be further stored in the memory 1804 or transmitted via the communication component 1816. In some embodiments, the audio component 1810 further includes a speaker to output audio signals.

The I/O interface 1812 provides an interface between the processing component 1802 and a peripheral interface module, such as a keyboard, a click wheel, a button, or the like. The buttons may include, but are not limited to, a home button, a volume button, a starting button, and a locking button.

The sensor component 1814 includes one or more sensors to provide status assessments of various aspects of the terminal 1800. For example, the sensor component 1814 may detect an open/closed status of the terminal 1800, relative positioning of components, e.g., the display and the keypad, of the terminal 1800, a change in position of the terminal 1800 or a component of the terminal 1800, a presence or absence of user contact with the terminal 1800, an orientation or an acceleration/deceleration of the terminal 1800, and a change in temperature of the terminal 1800. The sensor component 1814 may include a proximity sensor configured to detect the presence of nearby objects without any physical contact. The sensor component 1814 may also include a light sensor, such as a CMOS or CCD image sensor, for use in imaging applications. In some embodiments, the sensor component 1814 may also include an accelerometer sensor, a gyroscope sensor, a magnetic sensor, a pressure sensor, or a temperature sensor.

The communication component 1816 is configured to facilitate communications, wired or wirelessly, between the terminal 1800 and other devices. The terminal 1800 may access a wireless network based on a communication standard, such as WiFi, 2G, or 3G, or a combination thereof. In an exemplary embodiment, the communication component 1816 receives a broadcast signal or broadcast associated information from an external broadcast management system via a broadcast channel. In an exemplary embodiment, the communication component 1816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the terminal 1800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above-described methods.

In exemplary embodiments, there is also provided a non-transitory computer-readable storage medium including instructions, such as the memory 1804 including instructions, executable by the processor 1820 in the terminal 1800, for performing the above-described methods. For example, the non-transitory computer-readable storage medium may be a ROM, a random access memory (RAM), a compact disc read-only memory (CD-ROM), a magnetic tape, a floppy disc, an optical data storage device, or the like.

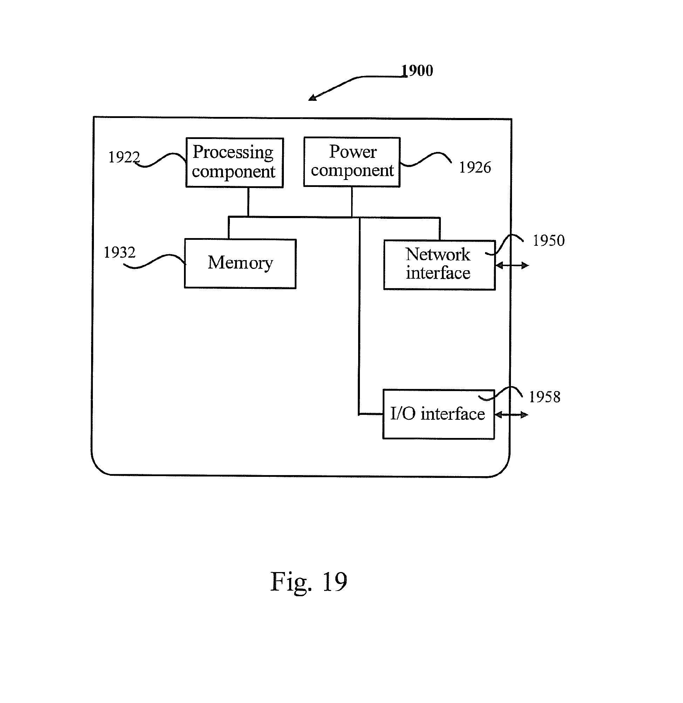

Fig. 19 is a block diagram illustrating a device 1900 for generating association information according to an exemplary embodiment of the present disclosure. For example, the device 1900 may be provided as a server. Referring to Fig. 19, the device 1900 includes a processing component 1922, which further includes one or more processors and memory resources represented by a memory 1932, configured to store instructions executable by the processing component 1922, for example, applications. The applications stored in the memory 1932 may include one or more than one module each corresponding to a group of instructions. In addition, the processing component 1922 is configured to execute the instructions, to perform the above methods.

The device 1900 may further include: a power component 1926, configured to perform power management in the device 1900; a wired or wireless network interface 1950, configured to connect the device 1900 to the network; and an input/output (I/O) interface 1958. The device 1900 may operate an operating system stored in the memory 1932, for example, Windows ServerTM, Mac OS XTM, UnixTM, LinuxTM, FreeBSDTM, or the like.

Other embodiments of the present disclosure will be apparent to those skilled in the art from consideration of the specification and practice disclosed herein. This application is intended to cover any variations, uses, or adaptations of the present disclosure following the general principles thereof and including such departures from the present disclosure as coming within common knowledge or customary technical means in the art. It is intended that the specification and embodiments be considered as exemplary only, with a true scope and spirit of the present disclosure being indicated by the appended claims.

It will be appreciated that the present disclosure is not limited to the exact construction that has been described above and illustrated in the accompanying drawings, and that various modifications and changes can be made without departing from the scope thereof. The scope of the present disclosure is only defined by the appended claims.

## Claims

1. A method for granting a qualification implemented by a server, **characterized in that** the method comprises:
receiving (201) a qualification sharing request sent by a first account for a second account, the qualification sharing request being a request for granting the second account a prioritized application qualification for a target service;
detecting (202) whether the first account has ever employed the target service; and
if the first account has ever employed the target service, granting (203) the second account the prioritized application qualification for the target service.

2. The method according to claim 1, wherein the step of granting the second account the prioritized application qualification for the target service comprises:
acquiring (406) communication information of the second account according to the qualification sharing request; and
sending (407) a prioritized application qualification code to the second account according to the communication information, the prioritized application qualification code comprising a permission to apply for the target service with priority.

3. A method for granting a qualification implemented by a terminal, **characterized in that** the method comprises:
acquiring (301, 401) a service identification of a target service and communication information of a second account;
generating (302, 402) a qualification sharing request according to the service identification and the communication information, the qualification sharing request being a request for granting the second account a prioritized application qualification for the target service; and
sending (303, 403) the qualification sharing request to a server; the server being configured to grant the second account the prioritized application qualification for the target service upon detecting that a first account has ever employed the target service.

4. The method according to claim 3, wherein the acquiring a service identification of a target service and communication information of a second account comprises:
receiving (501) a predetermined trigger signal triggered by a user to a target service that has been employed;
providing (502) a qualification sharing interface corresponding to the target service; and
acquiring (503) the service identification of the target service and the communication information of the second account according to the qualification sharing interface.

5. A device for granting a qualification, **characterized in that** the device comprises:
a request receiving module (1010, 1110), configured to receive a qualification sharing request sent by a first account for a second account, the qualification sharing request being a request for granting the second account a prioritized application qualification for a target service;
an account detecting module (1020, 1120), configured to detect whether the first account has ever employed the target service; and
a qualification granting module (1030, 1130), configured to grant the second account the prioritized application qualification for the target service if the account detecting module detects that the first account has ever employed the target service.

6. The device according to claim 5, wherein the qualification granting module (1130) comprises:
a communication information acquiring sub-module (1131), configured to acquire communication information of the second account according to the qualification sharing request; and
a qualification granting sub-module (1132), configured to send a prioritized application qualification code to the second account according to the communication information acquired by the communication information acquiring sub-module, the prioritized application qualification code comprising a permission to apply for the target service with priority.

7. A device for granting a qualification, **characterized by** comprising:
a processor; and
a memory for storing instructions executable by the processor;
wherein the processor is configured to perform:
receiving a qualification sharing request sent by a first account for a second account, the qualification sharing request being a request for granting the second account a prioritized application qualification for a target service;
detecting whether the first account has ever employed the target service; and
if the first account has ever employed the target service, granting the second account the prioritized application qualification for the target service.

8. A device for granting a qualification, **characterized by** comprising:
a processor; and
a memory for storing instructions executable by the processor;
wherein the processor is configured to perform:
acquiring a service identification of a target service and communication information of a second account;
generating a qualification sharing request according to the service identification and the communication information, the qualification sharing request being a request for granting the second account a prioritized application qualification for the target service; and
sending the qualification sharing request to a server; the server being configured to grant the second account the prioritized application qualification for the target service upon detecting that a first account has ever employed the target service.

9. A computer program including instructions for executing the steps of a method for granting a qualification implemented by a server according to any one of claims 1 to 2 when said program is executed by a computer.

10. A recording medium readable by a computer and having recorded thereon a computer program including instructions for executing the steps of a method for granting a qualification implemented by a server according to any one of claims 1 to 2.

11. A computer program including instructions for executing the steps of a method for granting a qualification implemented by a terminal according to any one of claims 3 to 4 when said program is executed by a computer.

12. A recording medium readable by a computer and having recorded thereon a computer program including instructions for executing the steps of a method for granting a qualification implemented by a terminal according to any one of claims 3 to 4.
